(19) Europäisches Patentamt / European Patent Office / Office européen des brevets

(11) **EP 4 531 412 B1**

(12) **EUROPÄISCHE PATENTSCHRIFT**

(45) Veröffentlichungstag und Bekanntmachung des Hinweises auf die Patenterteilung:
**27.08.2025   Patentblatt 2025/35**

(21) Anmeldenummer: **23200688.2**

(22) Anmeldetag: **28.09.2023**

(51) Internationale Patentklassifikation (IPC):
**H04N 23/68** (2023.01)     **H04N 23/60** (2023.01)
**H04N 25/47** (2023.01)

(52) Gemeinsame Patentklassifikation (CPC):
**H04N 23/683; H04N 23/6811**

(54) **AUFNAHME EINES OBJEKTSTROMS MIT EREIGNISBASIERTEM BILDSENSOR**

CAPTURING OBJECT STREAM WITH EVENT-BASED IMAGE SENSOR

CAPTURE DE FLUX D'OBJETS À L'AIDE D'UN CAPTEUR D'IMAGE BASÉ SUR DES ÉVÉNEMENTS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**02.04.2025   Patentblatt 2025/14**

(73) Patentinhaber: **SICK AG**
**79183 Waldkirch (DE)**

(72) Erfinder:
• **Müller, Dr. Romain**
**79252 Stegen (DE)**
• **Roscher, Sophie**
**22335 Hamburg (DE)**

(56) Entgegenhaltungen:
**US-A1- 2020 175 238**

• **WANG YUANZE ET AL: "A Multi-target Tracking Algorithm for Fast-moving Workpieces Based on Event Camera", IECON 2021 - 47TH ANNUAL CONFERENCE OF THE IEEE INDUSTRIAL ELECTRONICS SOCIETY, IEEE, 13 October 2021 (2021-10-13), pages 1 - 5, XP034014135, DOI: 10.1109/IECON48115.2021.9589502**
• **XU JIE ET AL: "Robust Motion Compensation for Event Cameras With Smooth Constraint", IEEE TRANSACTIONS ON COMPUTATIONAL IMAGING, IEEE, vol. 6, 4 January 2020 (2020-01-04), pages 604 - 614, XP011769695, ISSN: 2573-0436, [retrieved on 20200131], DOI: 10.1109/TCI.2020.2964255**

EP 4 531 412 B1

**Beschreibung**

Die Erfindung betrifft eine Kameravorrichtung und ein Verfahren zur Aufnahme eines Objektsstroms von Objekten in einer Bewegung mit einem ereignisbasierten Bildsensor nach dem Oberbegriff von Anspruch 1 beziehungsweise 14.

Die optische Erfassung eines Objektstroms ist ein wichtiger Anwendungsfall für Automatisierungsaufgaben in der Industrie oder Logistik. Häufig werden die Objekte auf einer Förderbandanlage zwischen verschiedenen Prozessschritten gefördert. Ein konkretes Anwendungsbeispiel unter vielen ist die Sortierung von Paketen oder sonstigen Objekten. Die Identifizierung erfolgt dabei in der Regel durch Lesen eines optischen Codes. In anderen Anwendungen beispielsweise der Qualitätssicherung werden keine Codes gelesen, sondern andere Bildmerkmale ausgewertet. Im Stand der Technik ist bekannt, der Kamera einen zusätzlichen Sensor zuzuordnen, wie einen Laserscanner, der vorab eine ergänzende Geometrievermessung übernimmt.

Für die Bilderfassung wird meist ein CMOS-Bildsensor eingesetzt. Dieser nimmt mit einer bestimmten Aufnahmefrequenz Bilder auf und integriert dafür innerhalb einer Belichtungszeit alle Ladungen auf, die durch einfallende Photonen erzeugt werden. Um ein günstiges Signal-Rausch-Verhältnis zu erreichen, sollte eine ausreichend lange Belichtungszeit gewählt werden, in der genügend Ladungen akkumuliert werden. In einer dynamischen Szene kann dies allerdings zu einer Verwaschung des Bildes führen (motion blur, Bewegungsunschärfe). Dies beeinträchtigt die Qualität der weiteren Bildverarbeitung. Speziell beim Codelesen verschlechtert sich die Leserate. Eine kürzere Belichtungszeit würde die Bewegungsunschärfe reduzieren, aber nur um den genannten Preis eines verschlechterten Signal-Rausch-Verhältnisses. Durch das Zusammengruppieren von Pixeln (Binning) könnte das Signal-Rausch-Verhältnis ebenfalls verbessert werden, aber dadurch geht Auflösung verloren.

In jüngerer Zeit ist eine neuartige Kameratechnik entstanden, die sogenannte ereignis- oder eventbasierte Kamera. Sie wird in Anlehnung an den visuellen Cortex auch als neuromorphologische Kamera bezeichnet. In einer ereignisbasierten Kamera gibt es weder eine feste Bildwiederholrate noch ein gemeinsames Auslesen von Pixeln. Stattdessen prüft jedes Pixel für sich, ob es eine Änderung in der Intensität feststellt. Nur in diesem Fall wird eine Bildinformation erzeugt und ausgegeben beziehungsweise ausgelesen, und zwar nur von diesem Pixel. Jedes Pixel ist somit eine Art unabhängiger Bewegungsdetektor. Eine erfasste Bewegung oder sonstige Änderung der Intensität wird individuell oder asynchron als Ereignis gemeldet. Dadurch reagiert die ereignisbasierte Kamera äußerst schnell auf die Dynamik in der Szene. Aus den Ereignissen erzeugte Bilder sind für das menschliche Auge nicht so intuitiv zu erfassen, weil die statischen Bildanteile fehlen.

Eine ereignisbasierte Kamera wird beispielsweise in einem Whitepaper der Firma Prophesee beschrieben, das auf deren Internetseite abgerufen werden kann. Aus der WO 2015/036592 A1, WO 2017/174579 A1 und WO 2018/073379 A1 sind jeweils Pixelschaltkreise für eine ereignisbasierte Kamera bekannt. In der EP 3 663 963 A1 wird eine ereignisbasierte Kamera zum Codelesen verwendet.

Werden die Ereignisse zur Erzeugung eines Bildes in einem Raster angeordnet und über die Zeit akkumuliert, dann entsteht bei sich bewegenden Objekten ähnlich wie bei längeren Integrationszeiten eines herkömmlichen Bildsensors eine Bewegungsunschärfe.

Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog. (CVPR), Vol. 1. 2018 stellt Verfahren vor, wie sich aus den Daten einer ereignisbasierten Kamera Bewegung, Entfernungen und optischer Fluss bestimmen lassen. Die US 2013/0335595 A1 offenbart eine Vorrichtung und ein Verfahren zur ereignisbasierten Bildverarbeitung, konkret zur Bestimmung des optischen Flusses. Das sind jeweils sehr aufwändige Verfahren, die zudem nicht für eine Kompensation der Bewegungsunschärfe genutzt werden.

Die US 11 138 742 beschreibt eine ereignisbasierte Merkmalsverfolgung. Dabei werden wie schon diskutiert zunächst aus den Ereignissen Bilder erzeugt und diese im zweiten Schritt hinsichtlich der Merkmale ausgewertet. Das ist im Endeffekt genauso aufwändig wie eine herkömmliche Filterung zur Kompensation von Bewegungsunschärfe und nutzt die Eigenschaften der ereignisbasierten Erfassung hinsichtlich der Bewegungskompensation nicht aus.

In der US 11 588 987 B2 werden die Ereignisse einer neuromorphologischen Kamera mit Hilfe eines neuronalen Netzes zu Bildern fusioniert. Das neuronale Netz wird aber nicht für eine Bewegungskompensation trainiert.

Die Arbeit von Stoffregen, Timo, et al.: "Event-based motion segmentation by motion compensation", Proceedings of the IEEE/CVF International Conference on Computer Vision, 2019 stellt einen Algorithmus vor, der Ereignisse zugleich in Objekte clustert und dabei Bewegungsparameter schätzt. Das ist äußerst aufwändig, und das Ergebnis der Kompensation der Bewegungsunschärfe hängt von dem Erfolg der typischerweise sehr fehlerträchtigen Segmentierung ab.

Aus der US 2020/0175238 A1 ist ein Verfahren zum Lesen von Codes mit einer ereignisbasierten Kamera bekannt. Dabei werden die Ereignisse in einer dreidimensionalen Matrix gesammelt, in der zwei Dimensionen diejenigen des Bildsensors und die dritte Dimension die Zeit ist. Unter der Annahme einer gleichförmigen Bewegung des aufgenommenen Codes kann diese Matrix gleichsam schräg entsprechend der Bewegung projiziert werden, um Codestrukturen sichtbar zu machen.

Die Arbeit von Wang, Yuanze, et al. "A multitarget tracking algorithm for fast-moving workpieces based on event camera", IECON 2021-47th Annual Conference of the IEEE Industrial Electronics Society, IEEE, 2021 befasst sich mit einer Objektverfolgung, die auf einer angepassten Version des neuronalen Netzes YOLOv4 basiert.

In der Arbeit von Gyongy, Istvan, et al., "Object tracking and reconstruction with a quanta image sensor", Proc. IISW (2017): 242-245 wird beschrieben, wie bei der Bildaufnahme mit einem QIS-Sensor (Quanta Image Sensor) Bewegungsunschärfen bei der Aggregation von Einzelaufnahmen durch Objektverfolgung reduziert werden können. Konkret wird ein bestimmter Algorithmus für die Objektverfolgung über Einzelaufnahmen beschrieben, mit dem eine Transformation zum Übereinanderlegen von Einzelbildern gewonnen wird.

Aus der Arbeit von Iwabuchi, Kiyotaka, Tomohiro Yamazaki, and Takayuki Hamamoto, "Iterative image reconstruction for quanta image sensor by using variance-based motion estimation," reconstruction 5 (2019): 6 ist ebenfalls bekannt, die Einzelaufnahmen eines QIS-Sensors unter Berücksichtigung der zwischenzeitlichen Objektbewegung zu kombinieren, wobei hier ein iterativer Ansatz gewählt wurde.

In beiden Fällen wird die Bewegung erst in dem überlagerten Bild geschätzt. Ein QIS-Sensor ist etwas völlig anderes als ein ereignisbasierter Bildsensor. Entsprechend ist auch das Vorgehen zur Verarbeitung der Daten nicht übertragbar. Insbesondere könnten die genannten Dokumente die nur dünn besetzten Datensätze einer ereignisbasierten Kamera gar nicht ausnutzen, weil sie ausschließlich mit sogar bereits überlagerten vollständigen Bildern arbeiten.

Die EP4358530 A1 überlagert Einzelbilder eines QIS-Sensors schon kompensierend unter Ausnutzung einer bekannten zwischenzeitlichen Bewegung. Das ändert aber nichts an der von einem ereignisbasierten Bildsensor völlig verschiedenen Technologie, die gar keine spärlich besetzten Datensätze liefert und dementsprechend zu deren gezielter Auswertung nicht beitragen kann.

Es ist daher Aufgabe der Erfindung, die Bildaufnahme mit einer ereignisbasierten Kamera zu verbessern.

Diese Aufgabe wird durch eine Kameravorrichtung und ein Verfahren zur Aufnahme eines Objektsstroms von Objekten mit einem ereignisbasierten Bildsensor nach Anspruch 1 beziehungsweise 13 gelöst. Die Objekte in dem Objektstrom befinden sich in einer Bewegung relativ zu der Kameravorrichtung. Der ereignisbasierte Bildsensor weist einen Bildsensor mit einer Vielzahl von Pixelelementen beispielsweise in einer Zeilen- oder Matrixanordnung auf. Die Kamera ist eine ereignisbasierte oder neuromorphologische Kamera und damit keine herkömmliche Kamera mit herkömmlichem Bildsensor. Die Unterschiede wurden einleitend kurz diskutiert: Die Pixelelemente erkennen jeweils Veränderungen in der Intensität, statt wie sonst üblich die jeweilige Intensität zu messen. Eine solche Veränderung, die vorzugsweise rasch genug sein und ein Rauschmaß übersteigen sollte, ist eines der namensgebenden Ereignisse. Zudem werden Signale nur bei einer solchen Veränderung in der Intensität bereitgestellt beziehungsweise ausgelesen, und zwar nur von dem betroffenen Pixel oder den betroffenen Pixeln.

Eine Steuer- und Auswertungseinheit liest die Ereignisse jeweils über ein Zeitintervall hinweg aus und erzeugt anhand der Position des ein jeweiliges Ereignis auslösenden Pixelelements ein Bild. Das Zeitintervall entspricht anschaulich in etwa der Belichtungszeit einer herkömmlichen Kamera.

Die Erfindung geht von dem Grundgedanken aus, dass die Ereignisse über das Zeitintervall hinweg, somit zu individuell unterschiedlichen Zeitpunkten ausgelöst wurden. Das kann je Ereignis über eine seit einem Bezugszeitpunkt verstrichene Zeit ausgedrückt werden. Der Bezugszeitpunkt ist im Prinzip beliebig, vorzugsweise der Beginn des Zeitintervalls. Eine abweichende Wahl des Bezugspunktes ist leicht korrigierbar, sie führt **lediglich** zu einer Verschiebung des entstehenden Bildes als Ganzes. Während der verstrichenen Zeit hat sich der Objektstrom weiterbewegt. Diese Bewegung wird erfindungsgemäß in den Ereignissen korrigiert. Das korrigierte Ereignis ist damit an den Ort zurückgerechnet, wo es sich zum Bezugszeitpunkt befand. Wird ein Bild aus den korrigierten Ereignissen erzeugt, so entspricht das somit effektiv einer Aufnahme in Ruhe statt in Bewegung. Aufgrund unvermeidlicher Fehler wird das in der Praxis nicht perfekt erreicht, aber jedenfalls weist das so erzeugte Bild höchstens noch eine kompensierte und idealisiert gar keine Bewegungsunschärfe mehr auf.

Die Erfindung hat den Vorteil, dass trotz der Bewegung Ereignisse über ein langes Zeitintervall gesammelt werden können, solange sich ein jeweiliges Objekt des Objektstroms in dem Sichtbereich der Kamera befindet. Die erfindungsgemäße Bewegungskompensation gleicht die Auswirkungen der Bewegung aus. Dadurch entstehen hochwertige Bilder, die im Anschluss weiterverarbeitet werden können. Dabei werden die Vorteile einer ereignisbasierten Kamera ausgenutzt, insbesondere deren extrem schnelle Datenerfassung.

Die Bewegung des Objektstroms ist vorzugsweise gleichförmig. Das ist ein praktisch sehr relevanter Fall, der durch feste Geschwindigkeit v=const. ein sehr vereinfachtes Kompensationsproblem stellt, das zudem durch eine feste Richtung der Bewegung nur eindimensional ist.

Der Bildsensor ist vorzugsweise mit den Zeilen oder Spalten der Pixelelemente in Richtung der Bewegung ausgerichtet. Die Kamera wird also so zum Objektstrom angebracht, dass die Bewegung entlang der Zeilen oder Spalten der Pixelelemente des Bildsensors verläuft. Das erleichtert die weitere Verarbeitung und vermeidet Diskretisierungsartefakte.

Die Ereignisse werden nach der Vorschrift $X_n = X - v * dT$ korrigiert, mit $X$ Position des das Ereignis auslösenden Pixelelements, $X_n$ neue Position, v Geschwindigkeit der Bewegung und $dT$ seit dem Bezugszeitpunkt verstrichene Zeit. Dabei ist die Richtung der gleichförmigen Bewegung ohne Beschränkung der Allgemeinheit als X-Richtung bezeichnet, das ließe sich immer durch eine einfache Drehung erreichen, wenn die Richtung der Bewegung nicht mit den Zeilen des Bildsensors übereinstimmt. In Y-Richtung ist damit keine Korrektur erforderlich, weil sich der Objektstrom in diese Richtung nicht bewegt. Die Einheiten sind wählbar, beispielsweise entsprechen die Positionen der Pixelposition auf dem Bildsensor, die verstrichene Zeit ist in Sekunden und die Geschwindigkeit ist in Pixel/Sekunde angegeben.

Bevorzugt ist die Kameravorrichtung stationär an einer Fördereinrichtung montiert, auf der die Objekte gefördert werden. Das ist eine besonders wichtige Gruppe von Anwendungen, die in der Industrie häufig vorkommen. Bei vorgegebener Bewegungsrichtung und regelmäßig konstanter Geschwindigkeit vereinfacht sich die Kompensation einer Bewegungsunschärfe erheblich. Es ist dabei denkbar, die Parameter der Bewegung aus Einstellungen der Fördereinrichtung zu übernehmen.

Die Steuer- und Auswertungseinheit ist bevorzugt dafür ausgebildet, die Bewegung aus den Ereignissen zu bestimmen. In diesem Fall gibt es keine Vorgaben oder zusätzlichen Informationen über die Bewegung, die vielmehr eigenständig von der Kameravorrichtung geschätzt wird. Dadurch müssen keine Schnittstellen geschaffen werden, und es ist sichergestellt, dass die tatsächliche und nicht eine nur gewünschte oder spezifizierte Bewegung berücksichtigt wird. Alternativ können Parameter der Bewegung von der Fördereinrichtung übernommen, manuell eingegeben oder mit einem zusätzlichen Sensor gemessen werden, beispielsweise einem Inkrementalgeber an einer Fördereinrichtung.

Die Steuer- und Auswertungseinheit ist bevorzugt dafür ausgebildet, zur Bestimmung der Geschwindigkeit der gleichförmigen Bewegung Ereignisse über ein Testzeitintervall zu sammeln, in ein zweidimensionales Schema einzuordnen, mit einer ersten Dimension der Position des jeweiligen das Ereignis auslösenden Pixelelements in Richtung der Bewegung und einer zweiten Dimension der Zeit des Auslösens des Ereignisses, und in dem Schema auf einer gemeinsamen Geraden liegende Ereignisse aufzufinden, wobei die Steigung der Geraden der Geschwindigkeit proportional ist. Das Testzeitintervall ist von dem Zeitintervall zu unterscheiden, es dient der Geschwindigkeitsschätzung und nicht der eigentlichen Bildaufnahme, und beide sind im Allgemeinen von unterschiedlicher Dauer, wobei auch eine gleich gewählte Dauer zulässig wäre. Das zweidimensionale Schema entspricht einem Orts-Zeit-Diagramm, aber der Begriff soll verdeutlichen, dass es auf die konkrete Repräsentation nicht ankommt. Es sollen lediglich die beiden genannten Dimensionen der Ereignisse in eine auswertbare Struktur gebracht werden. Die gleichförmige Bewegung des Objektstroms führt dazu, dass sich von einer selben Objektstruktur ausgelöste Ereignisse in dem zweidimensionalen Schema in Ort und Zeit gleichförmig verändern, mit anderen Worten auf einer gemeinsamen Geraden liegen.

Eine solche Gerade lässt sich mit an sich bekannten Mitteln der Datenauswertung finden und parametrieren, und deren Steigung entspricht der Geschwindigkeit der Objektstruktur repräsentativ für den Objektstrom. Je nach gewählten Einheiten für die Einordnung der Ereignisse in die beiden Dimensionen des zweidimensionalen Schemas ergibt sich noch ein Proportionalitätsfaktor, beziehungsweise die Steigung drückt die Geschwindigkeit in den Einheiten des zweidimensionalen Schemas aus und wird möglicherweise noch mit einem Proportionalitätsfaktor in gewünschte andere Einheiten umgerechnet. Werden vorzugsweise Ereignisse in der ersten Dimension über die Pixelposition und in der zweiten Dimension in Sekunden eingeordnet, so ergibt sich als Steigung die Geschwindigkeit in Pixel/s, was für die weitere Kompensation besonders geeignet ist. Es können mehrere Geraden zu mehreren Objektstrukturen aufgefunden werden, um die Geschwindigkeit redundant zu bestimmen, zu mitteln oder dergleichen.

Die Steuer- und Auswertungseinheit ist bevorzugt dafür ausgebildet, die gemeinsame Gerade mit einem RANSAC-Verfahren (Random Sample Consensus) aufzufinden. Das ist ein bewährtes Verfahren, um ein Modell in Daten mit auch zahlreichen Ausreißern zu schätzen, und es ist damit geeignet, die Gerade inmitten zahlreicher weiterer Ereignisse abseits der Geraden aufzufinden. Es sind alternativ andere an sich bekannte Verfahren für einen Geradenfit einsetzbar.

Die Steuer- und Auswertungseinheit ist bevorzugt dafür ausgebildet, die während des Testzeitintervalls gesammelten Ereignisse auf einen interessierenden Bereich (ROI, Region of Interest) des Bildsensors zu beschränken, insbesondere einen Teil mindestens einer Zeile oder Spalte. Damit wird die Menge an Ereignissen beschränkt, aus denen die Geschwindigkeit geschätzt wird. Das verringert nicht nur den Aufwand, sondern sorgt auch dafür, dass sich in dem zweidimensionalen Schema nur wenige oder gar nur eine einzige Gerade von Ereignissen befindet. Der interessierende Bereich sollte eine Vielzahl von Pixelelementen in Bewegungsrichtung aufweisen, damit darin ein Objektmerkmal über zumindest relevante Teile des Testzeitintervalls verfolgt werden kann. Besonders bevorzugt liegen die Zeilen oder Spalten des Bildsensors in Bewegungsrichtung, dann kann der interessierende Bereich als mindestens eine Zeile beziehungsweise Spalte oder ein Teil davon gewählt werden.

Die Steuer- und Auswertungseinheit ist bevorzugt dafür ausgebildet, bei der Erzeugung des Bildes zu berücksichtigen, ob einem Ereignis eine positive oder eine negative Intensitätsänderung zugrunde liegt, insbesondere nur Ereignisse mit positiver oder nur Ereignisse mit negativer Intensitätsänderung zu berücksichtigen. Ein Ereignis kann durch eine Intensitätserhöhung oder Intensitätserniedrigung ausgelöst werden, was als Vorzeichen oder Polarität des Ereignisses bezeichnet wird. Bei dem Erzeugen des Bildes kann die Polarität berücksichtigt werden. In einem einfachen Beispiel können die Ereignisse samt Vorzeichen aufaddiert werden, was dann dazu führt, dass Ereignisse einander womöglich teilweise auslöschen. Eine weitere Möglichkeit ist, die Ereignisse nach ihrem Vorzeichen zu trennen, also Bilder aus Ereignissen nur negativer und/oder nur positiver Polarität zu erzeugen. Durch eine Betragsbildung oder ein Weglassen des Vorzeichens werden alternativ alle Ereignisse gleichartig akkumuliert. So ermöglicht die unterschiedliche Behandlung der Polarität verschiedene Visualisierungen beziehungsweise sich anschließende Bildauswertungen.

Die Steuer- und Auswertungseinheit ist bevorzugt dafür ausgebildet, die Bewegung einmalig für eine Konfiguration der Kameravorrichtung oder wiederholt im Betrieb der Kameravorrichtung zu bestimmen. Durch eine anfängliche Bewegungsschätzung wird die Kameravorrichtung für eine nachfolgende Betriebsphase eingerichtet, in der ein sich weiterhin gleichartig oder wenigstens sehr ähnlich verhaltender Objektstrom erwartet wird, etwa an einer Fördereinrichtung. Dies kann im Betrieb wiederholt und damit überprüft oder nachjustiert werden. Eine weitere Möglichkeit ist, die Bewegung periodisch zu schätzen, in Zyklen, die einer erwarteten Veränderung des Objektsstroms entsprechen.

Die Steuer- und Auswertungseinheit ist bevorzugt dafür ausgebildet, für die Korrektur die Ereignisse selbst auszuwerten, ohne daraus zunächst ein Bild zusammenzusetzen, und erst abschließend nach der Korrektur aus den korrigierten Ereignissen das Bild mit kompensierter Bewegungsunschärfe zu erzeugen. Die Kompensation der Bewegungsunschärfe bleibt damit auf der Ebene von Ereignissen. Ein Bild im herkömmlichen Sinne gibt es erst abschließend, nachdem in den Ereignissen die Bewegung bereits kompensiert ist. Dadurch wird ausgenutzt, dass Ereignisse einen dünn besetzten Datensatz erzeugen. Es sind somit im Vergleich zu einer Bildauswertung im herkömmlichen Sinne nur ganz erheblich kleinere Datenmengen zu übertragen und auszuwerten.

Der Bildsensor erzeugt Bildinformationen bevorzugt mit einer Aktualisierungsfrequenz von mindestens einem KHz oder sogar mindestens zehn KHz. Die Aktualisierungsfrequenz einer herkömmlichen Kamera ist die Bildwiederholfrequenz oder Framerate. Eine solche gemeinsame Bildwiederholfrequenz kennt eine ereignisbasierte Kamera nicht, da die Pixelelemente ihre Bildinformationen einzeln und ereignisbasiert ausgeben oder auffrischen. Dabei gibt es extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen noch höheren Aktualisierungsfrequenz wäre das mit herkömmlichen Kameras technisch nicht mehr darstellbar.

Ein jeweiliges Pixelelement stellt bevorzugt fest, wenn sich die von dem Pixelelement erfasste Intensität ändert, und erzeugt genau dann ein Ereignis. Das drückt nochmals in anderen Worten das besondere Verhalten der Pixelelemente einer ereignisbasierten Kamera beziehungsweise eines ereignisbasierten Bildsensors aus, das bereits mehrfach angesprochen wurde. Das Pixelelement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst.

Das Pixelelement liefert vorzugsweise als Bildinformation eine differentielle Information, ob sich die Intensität verringert oder erhöht hat. Eine aus dem Pixelelement gelesene Bildinformation ist also beispielsweise eine Polarität, ein Vorzeichen +1 oder -1 je nach Änderungsrichtung der Intensität. Dabei kann eine Schwelle für Intensitätsänderungen gesetzt sein, bis zu denen das Pixelelement noch kein Ereignis auslöst. Auch die Dauer einer Intensitätsänderung kann eine Rolle spielen, indem beispielsweise der Vergleichswert für die Schwelle mit einer gewissen Abklingzeit nachgezogen wird. Eine zu langsame Veränderung löst dann kein Ereignis aus, auch wenn in Summe, über ein gegenüber der Abklingzeit längeres Zeitfenster, die Intensitätsänderung über der Schwelle lag.

Als Alternative zu einem differenziellen ereignisbasierten Bildsensor ist auch eine integrierende Variante vorstellbar. Dann liefert das Pixelelement als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Ein Ereignis weist bevorzugt jeweils Koordinateninformationen des zugehörigen Pixelelements, eine Zeitinformation und/oder eine Intensitätsinformation auf. Ein herkömmlicher Datenstrom eines Bildsensors besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen vorzugsweise Datentupel je Ereignis ausgegeben, die das Ereignis zuordenbar machen. Dabei werden vorzugsweise der Ort des zugehörigen Pixelelements, wie etwa dessen X-Y-Position auf dem Bildsensor, die Polarität oder Richtung $\pm 1$ der Intensitätsänderung beziehungsweise die zum Ereignis gemessene Intensität und/oder ein Zeitstempel festgehalten. Dadurch müssen trotz der hohen effektiven Bildwiederholrate nur sehr wenige Daten ausgelesen werden.

Die Steuer- und Auswertungseinheit ist bevorzugt dafür ausgebildet, in dem gemeinsamen Bild Codebereiche zu identifizieren und deren Codeinhalt auszulesen. Damit wird die Kameravorrichtung zu einem kamerabasierten Codeleser für Barcodes und/oder 2D-Codes nach diversen Standards, gegebenenfalls auch für eine Texterkennung (OCR, Optical Character Reading). Bei Codeleseranwendungen ist besonders wichtig, dass sämtliche Codebereiche in hoher Qualität aufgenommen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine Kamera in einer Anwendung über einem Förderband;

Fig. 2    eine schematische Darstellung eines zeitabhängigen Intensitätsverlaufs zur Erläuterung des Funktionsprinzips einer ereignisbasierten Kamera;

Fig. 3    ein Beispielbild bewegter Objekte, hier Flaschen, mit Bewegungsunschärfe bei einem unkorrigierten Aufsammeln von Ereignissen;

Fig. 4    eine Darstellung gemäß Figur 3 nun mit einem beispielhaften interessierenden Bereich (ROI, Region of Interest);

Fig. 5    ein beispielhaftes Orts-Zeit-Diagramm aus Ereignissen des interessierenden Bereichs der Figur 4 zur Erläuterung des Auffindens einer Geraden zur Geschwindigkeitsschätzung; und

Fig. 6    ein Beispielbild entsprechend Figur 3 nun mit erfindungsgemäß kompensierter Bewegungsunschärfe.

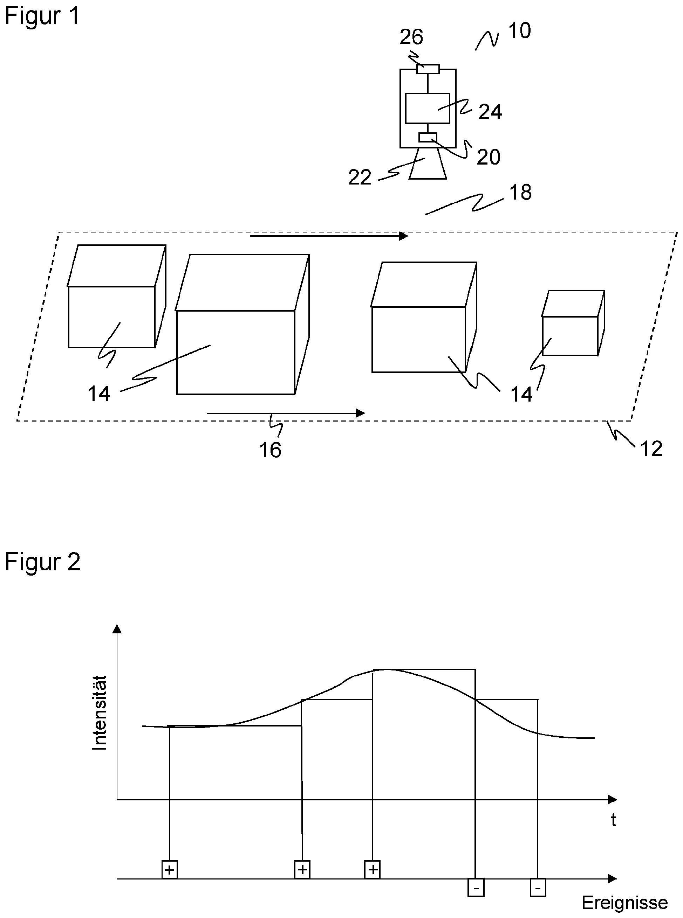

Figur 1 zeigt eine Kamera 10, die über einem Förderband 12 montiert ist, welches Objekte 14, wie durch den Pfeil 16 angedeutet, durch das Sichtfeld 18 der Kamera 10 fördert. Diese stationäre Anwendung der Kamera 10 an einem Förderband ist ein häufiger Fall aus der Praxis. Die Erfindung bezieht sich aber zunächst auf die Kamera 10 selbst, die Objekte 14 in einem Objektstrom beliebiger Ursache beobachtet, so dass weder die besonders vorteilhafte Perspektive von oben noch das Anwendungsbeispiel insgesamt einschränkend verstanden werden darf.

Die Kamera 10 erfasst mit einem Bildsensor 20 über ein nur rein schematisch gezeigtes Objektiv 22 jeder an sich bekannten Bauart Bildinformationen der geförderten Objekte 14. Der Bildsensor 20 umfasst in der Regel eine Matrix- oder Zeilenanordnung von Pixeln und ist ein ereignisbasierter Bildsensor. Im Gegensatz zu einem herkömmlichen Bildsensor werden dabei in den jeweiligen Pixeln nicht Ladungen über ein gewisses Integrationsfenster gesammelt und dann die Pixel gemeinsam als Bild ausgelesen, sondern von den einzelnen Pixeln Ereignisse ausgelöst und weitergegeben, wenn sich in deren Sichtfeld eine Intensitätsänderung ergibt. Später wird das Prinzip eines ereignisbasierten Bildsensors unter Bezugnahme auf die Figur 2 noch näher erläutert.

Die eigentliche Aufgabe der Kamera 10 spielt für die Erläuterung der Erfindung eine nebengeordnete Rolle. Jedenfalls geht es um eine Bildauswertung, die qualitativ hochwertige Aufnahmen erfordert. Beispielsweise werden die Objekte 14 auf bestimmte Merkmale geprüft oder vermessen. Insbesondere ist eine Weiterbildung als kamerabasierter Codeleser vorstellbar, mit dem dann Codebereiche auf den Objekten 14 erfasst und die dort angebrachten Codes ausgelesen werden.

Mit dem Bildsensor 20 ist eine Steuer- und Auswertungseinheit 24 verbunden, die dessen Aufnahmen steuert, die jeweiligen Ereignisse ausliest und weiterverarbeitet. Die Steuer- und Auswertungseinheit 24 weist mindestens einen digitalen Rechenbaustein auf, wie mindestens einen Mikroprozessor, mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor. Insbesondere in Codeleseanwendungen wird häufig eine Vorverarbeitung auf einen eigenen digitalen Rechenbaustein ausgelagert, für Vorverarbeitungsschritte wie eine Entzerrung, eine Helligkeitsanpassung, eine Binarisierung, eine Segmentierung, das Auffinden von interessierenden Bereichen (ROI, Region of Interest), speziell Codebereichen und dergleichen. Die eigentliche Bildverarbeitung nach dieser Vorverarbeitung erfolgt dann vorzugsweise in mindestens einem Mikroprozessor. Die Steuer- und Auswertungseinheit 24 kann überdies zumindest teilweise extern der Kamera 10 vorgesehen sein, etwa in einer übergeordneten Steuerung, einem angeschlossenen Netzwerk, einem Edge-Device oder einer Cloud.

Über eine Schnittstelle 26 gibt die Kamera 10 Informationen aus, wie Bilddaten oder daraus gewonnene Auswertungsergebnisse. Sofern die Funktionalität der Steuer- und Auswertungseinheit 24 zumindest teilweise außerhalb der Kamera 10 vorgesehen ist, kann die Schnittstelle 26 für die dafür notwendige Kommunikation genutzt werden. Umgekehrt kann die Kamera 10 über die Schnittstelle 26 oder eine weitere Schnittstelle Informationen von weiteren Sensoren oder einer übergeordneten Steuerung erhalten. Dadurch ist beispielsweise möglich, eine feste oder aktuelle Fördergeschwindigkeit des Förderbandes an die Kamera 10 zu übermitteln oder Geometrieinformationen über die Objekte 14 zu erhalten, insbesondere deren Abstand zur Kamera 10.

Figur 2 zeigt zur Erläuterung des Funktionsprinzips des ereignisbasierten Bildsensors 20 im oberen Teil einen rein beispielhaften zeitlichen Intensitätsverlauf in einem Pixelelement des Bildsensors 20. Ein herkömmlicher Bildsensor würde diesen Intensitätsverlauf über ein vorgegebenes Belichtungszeitfenster integrieren, die integrierten Werte aller Pixelelemente würden im Takt einer vorgegebenen Framerate ausgegeben und dann für das nächste Bild zurückgesetzt.

Das Pixelelement des ereignisbasierten Bildsensors 20 reagiert stattdessen individuell und unabhängig von einer Framerate auf eine Intensitätsänderung. Mit senkrechten Strichen sind jeweils Zeitpunkte markiert, zu denen eine Intensitätsänderung festgestellt wurde. Im unteren Teil der Figur 2 sind zu diesen Zeitpunkten Ereignisse mit Plus und Minus je nach Richtung der Intensitätsänderung dargestellt. Es ist denkbar, dass das Pixelelement nicht auf jegliche Intensitätsänderung reagiert, sondern erst, wenn eine gewisse Schwelle überschritten wird. Weitergehend kann verlangt sein, dass die Schwelle innerhalb eines bestimmten Zeitfensters überschritten wird. Vergleichswerte früherer Intensitäten jenseits des Zeitfensters werden dann gleichsam vergessen. Durch Schwelle und/oder Zeitfenster lässt sich ein Pixelelement vorteilhafterweise schon individuell zumindest grob auf die Erkennung von Blitzen konfigurieren.

Die von einem Pixelelement erzeugten Ereignisse werden individuell zum Zeitpunkt des Ereignisses oder vorzugsweise in Auslesezyklen der Dauer dt ausgelesen und damit an die Steuer- und Auswertungseinheit 24 übertragen. Dabei ist die Zeitauflösung keineswegs auf dt begrenzt, da das Pixelelement das jeweilige Ereignis mit einem beliebig feinen Zeitstempel versehen kann. Die durch dt festgelegten Zyklen sind auch ansonsten nicht mit einer herkömmlichen Framerate zu vergleichen. Herkömmlich bedeutet eine höhere Framerate eine direkt linear heraufskalierte Datenmenge durch die zusätzlichen Bilder. Bei dem ereignisbasierten Bildsensor 20 hängt die zu übertragende Datenmenge von dt bis auf einen gewissen Verwaltungsoverhead nicht ab. Wird nämlich dt kürzer gewählt, so sind je Auslesezyklus auch weniger Ereignisse zu verarbeiten. Die Datenmenge bestimmt sich durch die Anzahl der Ereignisse und ist damit weitgehend unabhängig von dt.

Neben differenziellen ereignisbasierten Kameras gibt es auch integrierende ereignisbasierte Kameras. Sie reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Zur Technologie einer ereignisbasierten Kamera wird erneut ergänzend auf die einleitend genannte Patentliteratur und wissenschaftliche Literatur verwiesen.

Die Bildinformation des ereignisbasierten Bildsensors 20 ist kein Bild, sondern eine Ereignisliste. Ein jeweiliges Ereignis wird beispielsweise als Tupel mit dem Vorzeichen der Intensitätsänderung bei einer differentiellen ereignisbasierten Kamera beziehungsweise einem Grauwert bei einer integrierenden ereignisbasierten Kamera, der Pixelposition auf dem Bildsensor 20 in X- und Y-Richtung und einem Zeitstempel ausgegeben. Die nun beschriebene Kompensation der Bewegungsunschärfe kann vollständig auf Ebene von Ereignissen oder Ereignislisten erfolgen. Ein Bild im herkömmlichen Sinne wird daraus vorzugsweise erst abschließend für nachgelagerte Bildauswertungen erzeugt, nachdem die Bewegungsunschärfe bereits in den Ereignissen korrigiert ist. Das reduziert die zu verarbeitenden Daten ganz erheblich vor allem im Vergleich zu herkömmlichen Entzerrungsverfahren, die auf Bildern und daraus erst noch extrahierten Bildmerkmalen basieren.

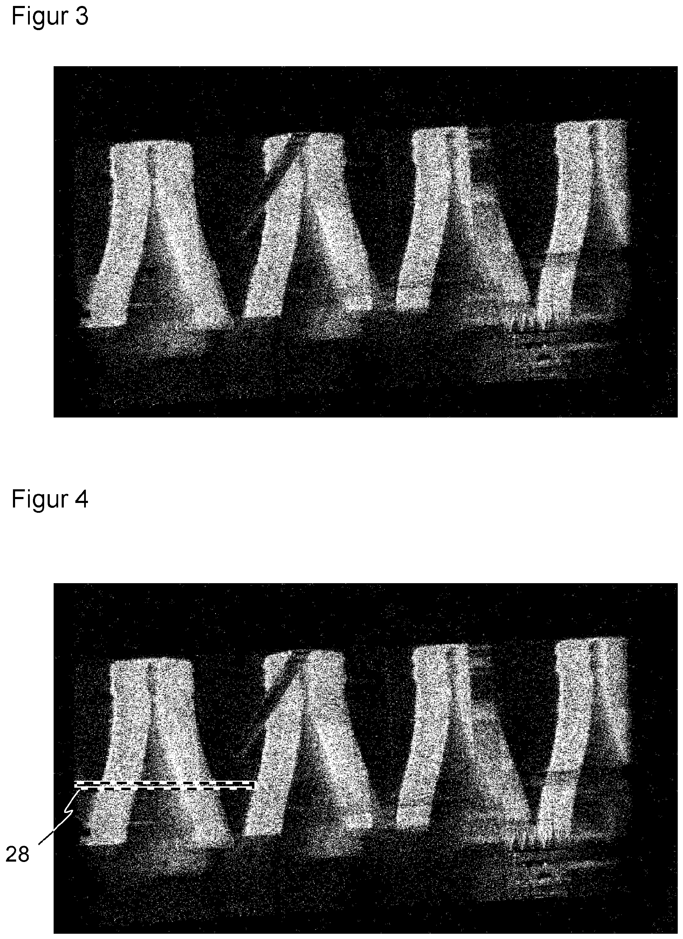

Figur 3 zeigt als Ausgangspunkt ein Beispielbild bewegter Objekte, hier Flaschen in einer Bewegung von links nach rechts, mit unkompensierter Bewegungsunschärfe. Es werden dafür die Ereignisse über ein Zeitintervall gesammelt und entsprechend der Position des jeweils auslösenden Pixels in einem XY-Raster eines herkömmlichen Bildes gesammelt oder aufaddiert. Ein Objektmerkmal, wie eine Kante einer Flasche, wird dabei im Laufe der Bewegung während des Zeitintervalls nacheinander mehrfach in benachbarten Pixeln als Ereignis registriert. Dadurch wird die Kante in Bewegungsrichtung verbreitert oder verschmiert, es entstehen erhebliche Bewegungsartefakte, die bei größerer Dauer des Zeitintervalls noch weiter zunehmen. Ein extrem kurzes Zeitintervall könnte die Bewegungsartefakte verhindern, würde aber ein dunkles Bild aus nur sehr wenigen Ereignissen liefern. Das ist insoweit vergleichbar mit den Zusammenhängen zwischen Integrationsdauer oder Belichtungszeit, Unterbelichtung und Bewegungsunschärfe einer herkömmlichen Kamera.

Für eine Kompensation der Bewegungsunschärfe ist es erforderlich, die Bewegung der Objekte zu kennen. Dieses Wissen kann auf beliebige Weise gewonnen oder vorgegeben sein. Nachfolgend wird beispielhaft eine vorteilhafte Schätzung der Geschwindigkeit bei einer gleichförmigen Bewegung der Objekte vorgestellt, wie sie auch in der Anwendungssituation der Figur 1 vorliegt. Da bei einer gleichförmigen Bewegung jedes Objektmerkmal repräsentativ für die gesamte Bewegung herangezogen werden kann, wird zunächst ein interessierender Bereich 28 (ROI, Region of Interest) ausgewählt, wie in Figur 4 in einer ansonsten wiederholten Darstellung der Figur 3 illustriert. Der interessierende Bereich 28 verringert die zu verarbeitende Datenmenge und erleichtert die Auswertung. Der interessierende Bereich 28 sollte eine Vielzahl von Pixeln in Bewegungsrichtung aufweisen. Im Beispiel bei einer Bewegung von links nach rechts ist eine Pixelzeile oder genauer ein Segment davon ausgewählt, allgemein sind mehrere Zeilen oder ein rechteckiger Bereich denkbar. Dabei wird noch eine vorteilhafte Ausrichtung der Pixelzeilen zur Bewegungsrichtung unterstellt. Das wäre ebenso mit Pixelspalten und entsprechend verdrehter Ausrichtung vorstellbar. Prinzipiell sind beliebige Formen des interessierenden Bereichs 28 möglich, die dann aber die Auswertung unnötig erschweren. Das gilt entsprechend für eine fehlende Ausrichtung zwischen Bewegungsrichtung und Pixelzeilen oder Pixelspalten.

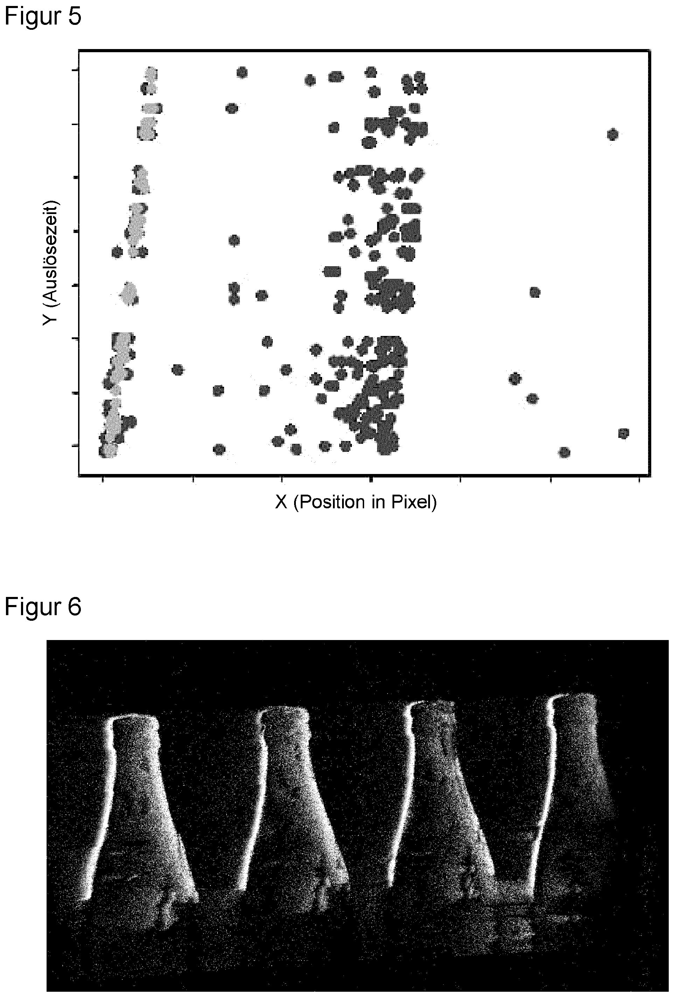

Figur 5 zeigt ein beispielhaftes Orts-Zeit-Diagramm aus Ereignissen der Pixel des interessierenden Bereichs der Figur **4,** die über eine gewisse wählbare Dauer aufgesammelt sind, wobei diese Dauer zur Unterscheidung von dem in Figur 3 eingeführten Zeitintervall zur Aufnahme eines Bildes als Testzeitintervall bezeichnet wird. Auf der X-Achse ist die Position des jeweils ein Ereignis auslösenden Pixels aufgetragen, wobei die X-Richtung ohne Beschränkung der Allgemeinheit die Zeilenrichtung und die Bewegungsrichtung ist. Die Y-Achse ist die Zeitachse. Ein jeweiliger Punkt in dem Orts-Zeit-Diagramm entspricht damit einem Ereignis in einem Pixel an Position X zum Auslösezeitpunkt t. Das gezeigte Orts-Zeit-Diagramm dient der Veranschaulichung, die Steuer- und Auswertungseinheit 24 kann ebenso direkt mit Ereignislisten oder in beliebiger sonstiger Repräsentation arbeiten.

Ein Objektmerkmal löst im Laufe der gleichförmigen Bewegung nacheinander Ereignisse in benachbarten Pixeln aus. Deshalb ergibt sich eine Gerade in dem Orts-Zeit-Diagramm, die zur Veranschaulichung durch hellere Punkte hervorgehoben ist. Die Steigung dieser Geraden ist der Geschwindigkeit der gleichförmigen Bewegung proportional beziehungsweise in den gewählten Einheiten der Achsen gleich der Geschwindigkeit. Um die Gerade aufzufinden, kann ein beliebiges an sich bekanntes Verfahren eingesetzt werden. Besonders geeignet ist ein RANSAC-Verfahren, das besonders robust mit Ausreißern umgehen kann. Das RANSAC-Verfahren oder ein sonstiges Geradenfit-Verfahren kann zudem Bewertungsparameter erzeugen, aus dem sich Rückschlüsse ziehen lassen, ob das die Gerade erzeugende Objektmerkmal gut ausgeprägt ist oder ob womöglich Störgrößen aufgetreten sind, die es nicht verlässlich erlauben, die Gerade und damit deren Steigung zu bestimmen.

Innerhalb des interessierenden Bereichs 28 können mehrere Objektmerkmale erfasst sein, die mehrere Geraden erzeugen, wie in Figur 5 weiter rechts der hell hervorgehobenen Punkte auch erkennbar. Der Geradenfit kann das beispielsweise dadurch umgehen, dass lediglich nach einer beliebigen Gerade gesucht und nicht versucht wird, die Gesamtheit der Punkte als Gerade zu interpretieren. Alternativ wird der Suchbereich auf einen Teilabschnitt der X-Achse beschränkt. Als weitere, keineswegs abschließend genannte Alternative wird nicht nur eine Gerade, sondern eine Schar von Geraden modelliert. Es kann dann beispielsweise die verlässlichste Gerade ausgewählt werden, oder es erfolgt eine Mehrfacherfassung der Steigung mit Redundanz, gegenseitiger Plausibilisierung, Mittelung oder dergleichen.

Das beschriebene Verfahren zur Schätzung der Geschwindigkeit kann beispielsweise bei der Inbetriebnahme einmalig durchlaufen werden. Zur Anpassung an unterschiedliche Bewegungen, etwa ein Förderband mit mehreren Arbeitsgeschwindigkeiten, ist auch denkbar, die Schätzung in zufälligen oder vorgegebenen, insbesondere zyklischen Zeitabständen erneut durchzuführen. Eine neue Schätzung kann die alte Schätzung verdrängen oder beispielsweise in einer Mittelung der jeweils jüngsten Schätzungen modifizieren.

Die Kenntnis der Geschwindigkeit, sei es mit dem erläuterten Schätzverfahren aus der Steigung der aufgefundenen Gerade beispielsweise in der Einheit Pixel/s oder auf anderem Wege, ermöglicht nun, in den Aufnahmen des Bildsensors 20 die Bewegungsunschärfe zu kompensieren. Das Nachfolgende bezieht sich also nicht mehr auf die Schätzung der Geschwindigkeit und die Figuren 4 und 5, die letztlich nur eine Hilfsgröße bestimmt, sondern die eigentliche Bildaufnahme.

Bildlich gesprochen sollen die Ereignisse anhand der bekannten zwischenzeitlichen Bewegung auf einen gemeinsamen Bezugszeitpunkt umgerechnet werden. Der Bezugszeitpunkt ist im Folgenden ohne Beschränkung der Allgemeinheit der Beginn eines Zeitintervalls, in dem Ereignisse für eine Bildaufnahme gesammelt werden. Diese Wahl ist letztlich frei und nicht sonderlich erheblich, da ein abweichender Bezugszeitpunkt lediglich einen gemeinsamen Versatz des gesamten bewegungskompensierten Bildes erzeugt.

Es wird dann je Ereignis der bisherige Wert X des Ereignisses in einen korrigierten Wert $X_n$ umgerechnet, nach der Vorschrift

$$X_n = X - v * dT.$$

Dabei ist v die insbesondere als Steigung bestimmte Geschwindigkeit vorzugsweise in der Einheit Pixel/s und $dT$ die laut Auslösezeitpunkt des betrachteten Ereignisses seit dem Bezugszeitpunkt verstrichene Zeit. In Y-Richtung ist nichts zu korrigieren, da die Bewegung in X-Richtung erfolgt. Der Auslösezeitpunkt des Ereignisses ist nach dieser Umrechnung zumindest für das erfindungsgemäße Verfahren nicht länger von Interesse, stünde aber natürlich für andere Auswertungen noch zur Verfügung.

Figur 6 zeigt ein Beispielbild entsprechend Figur 3 nun mit erfindungsgemäß kompensierter Bewegungsunschärfe. Während das Vergleichsbild der Figur 3 aus den ursprünglichen Ereignissen zusammengesetzt ist, sind in dem Beispielbild der Figur 6 nun die entsprechend der Bewegung beziehungsweise Geschwindigkeit korrigierten Ereignisse zu einem Bild akkumuliert. Die Flaschen sind nun deutlich und scharf erkennbar. Die etwas ungewohnte Darstellung ist der ereignisbasierten Erfassung geschuldet, die gleichförmige Flächen ohne Intensitätsänderung ignoriert. Bewegungsartefakte sind so gut wie nicht mehr erkennbar.

Es gibt noch alternative Möglichkeiten, die Ereignisse in einem Bild zu sammeln. Dazu kann insbesondere die Polarität herangezogen werden, also das Vorzeichen der Intensitätsänderung, die ein Ereignis ausgelöst hat. Im einfachsten Fall wird das Vorzeichen ignoriert, was einer Betragssumme oder einem Zählen von Ereignissen ungeachtet der Polarität entspricht. Bei einem Aufsummieren unter Berücksichtigung des Vorzeichens können positive und negative Ereignisse einander auslöschen. Es ist auch denkbar, beides voneinander abzuziehen, also die Betragssumme und die Summe mit Berücksichtigung der Vorzeichen, wodurch sich zeigt, an welchen Stellen im Bild besonders viele Ereignisse einander ausgelöscht haben. So etwas spricht beispielsweise für ein instabiles oder unzuverlässiges Bildmerkmal. Denkbar ist weiterhin ein Bild aus nur positiven Ereignissen und/oder aus nur negativen Ereignissen. Die Polarität ermöglicht somit, in dem Bild wahlweise verschiedene Aspekte hervorzuheben, die für eine nachgelagerte Bildauswertung wichtig werden können.

Das Zeitintervall, in dem Ereignisse für ein jeweiliges Bild gesammelt werden, ist ein freier Parameter. Eine bevorzugte Obergrenze ist die Zeit, die ein Objekt zum Durchlaufen des Sichtfeldes 18 benötigt. Es sind aber auch Bruchteile davon denkbar, beispielsweise um sich auf bestimmte Teilbereiche oder Objekte zu konzentrieren oder um zwei oder mehr aufeinanderfolgende Aufnahmen je Durchlaufzeit eines Objekts zu erzeugen. Ist beispielsweise ein Geschehen in der Mitte des Sichtfeldes 18 von besonderem Interesse, so können drei Bilder erzeugt werden, eines für das einlaufende Objekt, eines für das an dem Geschehen zentrierte Objekt und eines für das auslaufende Objekt.

**Patentansprüche**

**1.** Kameravorrichtung (10) zur Aufnahme eines Objektsstroms von Objekten (14) in einer Bewegung relativ zu der Kameravorrichtung (10), die einen ereignisbasierten Bildsensor (20) mit einer Vielzahl von Pixelelementen, der Ereignisse bei einer sich verändernden Intensität erfasst und eine Ereignisliste mit einem Datentupel je Ereignis ausgibt, wobei ein Ereignis jeweils eine X-Y-Position des zugehörigen Pixelelements und eine Zeitinformation umfasst, sowie eine Steuer- und Auswertungseinheit (24) aufweist, die dafür ausgebildet ist, die Ereignisse über ein Zeitintervall auszulesen und daraus ein Bild zu erzeugen, **dadurch gekennzeichnet, dass** die Steuer- und Auswertungseinheit (24) weiterhin dafür ausgebildet ist, die Ereignisse entsprechend einer seit einem Bezugszeitpunkt verstrichenen Zeit und der während der verstrichenen Zeit erfolgten Bewegung nach der Vorschrift $X_n = X - v * dT$ zu korrigieren, mit $X$ als X-Position des das Ereignis auslösenden Pixelelements ohne Beschränkung der Allgemeinheit in Richtung der Bewegung, $X_n$ neue Position, $v$ Geschwindigkeit der Bewegung und $dT$ seit dem Bezugszeitpunkt verstrichene Zeit, und für die Korrektur der während der verstrichenen Zeit erfolgten Bewegung die Ereignisse selbst auszuwerten, ohne daraus zunächst ein Bild zusammenzusetzen, und erst abschließend nach der Korrektur aus den so korrigierten Ereignissen ein Bild mit kompensierter Bewegungsunschärfe zu erzeugen, so dass die Kompensation der Bewegungsunschärfe vollständig auf Ebene von Ereignislisten erfolgt.

**2.** Kameravorrichtung (10) nach Anspruch 1, wobei die Bewegung des Objektstroms gleichförmig ist.

**3.** Kameravorrichtung (10) nach Anspruch 2, wobei der Bildsensor (20) mit den Zeilen oder Spalten der Pixelelemente in Richtung der Bewegung ausgerichtet ist.

**4.** Kameravorrichtung (10) nach Anspruch 2 oder 3, die stationär an einer Fördereinrichtung (12) montiert ist, auf der die Objekte (14) gefördert werden.

**5.** Kameravorrichtung (10) nach einem der vorhergehenden Ansprüche, wobei die Steuer- und Auswertungseinheit (24) dafür ausgebildet ist, die Bewegung aus den Ereignissen zu bestimmen.

**6.** Kameravorrichtung (10) nach einem der vorhergehenden Ansprüche, wobei die Steuer- und Auswertungseinheit (24) dafür ausgebildet ist, zur Bestimmung der Geschwindigkeit einer gleichförmigen Bewegung Ereignisse über ein Testzeitintervall zu sammeln, in ein zweidimensionales Schema einzuordnen, mit einer ersten Dimension der Position des jeweiligen das Ereignis auslösenden Pixelelements in Richtung der Bewegung und einer zweiten Dimension der Zeit des Auslösens des Ereignisses, und in dem Schema auf einer gemeinsamen Geraden liegende Ereignisse aufzufinden, wobei die Steigung der Geraden der Geschwindigkeit proportional ist.

**7.** Kameravorrichtung (10) nach Anspruch 6, wobei die Steuer- und Auswertungseinheit (24) dafür ausgebildet ist, die gemeinsame Gerade mit einem RANSAC-Verfahren aufzufinden.

**8.** Kameravorrichtung (10) nach Anspruch 6 oder 7, wobei die Steuer- und Auswertungseinheit (24) dafür ausgebildet ist, die während des Testzeitintervalls gesammelten Ereignisse auf einen interessierenden Bereich (28) des Bildsensors (20) zu beschränken, insbesondere einen Teil mindestens einer Zeile oder Spalte.

9. Kameravorrichtung (10) nach einem der vorhergehenden Ansprüche,
wobei die Steuer- und Auswertungseinheit (24) dafür ausgebildet ist, bei der Erzeugung des Bildes zu berücksichtigen, ob einem Ereignis eine positive oder eine negative Intensitätsänderung zugrunde liegt, insbesondere nur Ereignisse mit positiver oder nur Ereignisse mit negativer Intensitätsänderung zu berücksichtigen.

10. Kameravorrichtung (10) nach einem der vorhergehenden Ansprüche,
wobei die Steuer- und Auswertungseinheit (24) dafür ausgebildet ist, die Bewegung einmalig für eine Konfiguration der Kameravorrichtung (10) oder wiederholt im Betrieb der Kameravorrichtung (10) zu bestimmen.

11. Kameravorrichtung (10) nach einem der vorhergehenden Ansprüche,
wobei der Bildsensor (20) Bildinformationen mit einer Aktualisierungsfrequenz von mindestens einem KHz oder sogar mindestens zehn KHz erzeugt und/oder wobei ein jeweiliges Pixelelement feststellt, wenn sich die von dem Pixelelement erfasste Intensität ändert, und genau dann ein Ereignis erzeugt, wobei insbesondere das Ereignis eine differentielle Information aufweist, ob sich die Intensität verringert oder erhöht hat.

12. Kameravorrichtung (10) nach einem der vorhergehenden Ansprüche,
wobei ein Ereignis eine Intensitätsinformation aufweist.

13. Verfahren zur Aufnahme eines Objektsstroms von Objekten (14) in einer Bewegung, bei dem mit einem ereignisbasierten Bildsensor (20) mit einer Vielzahl von Pixelelementen Ereignisse einer sich verändernden Intensität erfasst und über ein Zeitintervall als Ereignisliste mit einem Datentupel je Ereignis ausgelesen werden, wobei ein Ereignis jeweils eine X-Y-Position des zugehörigen Pixelelements und eine Zeitinformation umfasst, und daraus ein Bild erzeugt wird, **dadurch gekennzeichnet,**
**dass** die Ereignisse entsprechend einer seit einem Bezugszeitpunkt verstrichenen Zeit und der während der verstrichenen Zeit erfolgten Bewegung nach der Vorschrift $X_n = X - v * dT$ korrigiert werden, mit $X$ als X-Position des das Ereignis auslösenden Pixelelements ohne Beschränkung der Allgemeinheit in Richtung der Bewegung, $X_n$ neue Position, v Geschwindigkeit der Bewegung und $dT$ seit dem Bezugszeitpunkt verstrichene Zeit, und für die Korrektur der während der verstrichenen Zeit erfolgten Bewegung, und für die Korrektur der während der verstrichenen Zeit erfolgten Bewegung die Ereignisse selbst ausgewertet werden, ohne daraus zunächst ein Bild zusammenzusetzen, und erst abschließend nach der Korrektur aus den so korrigierten Ereignissen ein Bild mit kompensierter Bewegungsunschärfe erzeugt wird, so dass die Kompensation der Bewegungsunschärfe vollständig auf Ebene von Ereignislisten erfolgt.

**Claims**

1. A camera device (10) for capturing a stream of objects (14) in motion relative to the camera device (10), comprising an event-based image sensor (20) having a plurality of pixel elements, which detects events at changing intensity and outputs an event list with a data tuple for each event, wherein an event includes an X-Y position of the corresponding pixel element and a time information, and further comprising a control and evaluation unit (24), configured to read out the events over a time interval and to generate an image therefrom, **characterized in that** the control and evaluation unit (24) is further configured to correct the events according to the time elapsed since a reference time point and the motion that occurred during the elapsed time according to the formula $X_n = X - v * dT$, with $X$ as the X-position of the pixel element triggering the event, without loss of generality in the direction of motion, $X_n$ the new position, v the speed of motion and $dT$ time elapsed since the reference time point, and to evaluate the events themselves for the correction of the motion occurring during the elapsed time, without first assembling an image therefrom, and only subsequently to generate an image with compensated motion blur from the thus corrected events, such that the compensation of motion blur is carried out entirely at the level of event lists.

2. The camera device (10) according to claim 1, wherein the motion of the object stream is uniform.

3. The camera device (10) according to claim 2, wherein the image sensor (20) is aligned with the rows or columns of the pixel elements in the direction of motion.

4. The camera device (10) according to claim 2 or 3, which is mounted stationarily on a conveying device (12) on which the objects (14) are conveyed.

5. The camera device (10) according to any of the preceding claims, wherein the control and evaluation unit (24) is configured to determine the motion from the events.

6. The camera device (10) according to any of the preceding claims, wherein the control and evaluation unit (24) is configured to collect events over a test time interval to determine the speed of a uniform motion, to assign them in a twodimensional scheme with a first dimension of the position of the respective pixel element triggering the event in the direction of the motion, and a second dimension of the time of triggering of the event, and to identify events lying on a common straight line in the scheme, wherein the slope of the line is proportional to the speed.

7. The camera device (10) according to claim 6, wherein the control and evaluation unit (24) is configured to identify the common straight line using a RANSAC method.

8. The camera device (10) according to claim 6 or 7, wherein the control and evaluation unit (24) is configured to restrict the events collected during the test time interval to an area of interest (28) of the image sensor (20), in particular to a portion of at least one row or column.

9. The camera device (10) according to any of the preceding claims, wherein the control and evaluation unit (24) is configured to consider, when generating the image, whether an event is based on a positive or a negative change in intensity, in particular to consider only events with positive or only events with negative change in intensity.

10. The camera device (10) according to any of the preceding claims, wherein the control and evaluation unit (24) is configured to determine the motion either once for a configuration of the camera device (10) or repeatedly during the operation of the camera device (10).

11. The camera device (10) according to any of the preceding claims, wherein the image sensor (20) generates image information with an update frequency of at least one kHz or even at least ten kHz, and/or wherein a respective pixel element detects when the intensity sensed by the pixel element changes and generates an event exactly at that time, in particular wherein the event comprises differential information whether the intensity has increased or decreased.

12. The camera device (10) according to any of the preceding claims, wherein an event comprises intensity information.

13. A method for capturing a stream of objects (14) in motion, in which events of a changing intensity are detected with an event-based image sensor (20) having a plurality of pixel elements and read out over a time interval as an event list with a data tuple for each event, wherein an event comprises an X-Y position of the corresponding pixel element and time information, and an image is generated therefrom, **characterized in that** the events are corrected according to the time elapsed since a reference time point and the motion that occurred during the elapsed time according to the formula $X_n = X - v * dT$, with $X$ as the X-position of the pixel element triggering the event, without loss of generality in the direction of motion, $X_n$ the new position, $v$ the speed of motion and $dT$ time elapsed since the reference time point, and the events themselves are evaluated for correcting the motion occurring during the elapsed time, without first composing an image from them, and only subsequently an image with compensated motion blur is generated from the thus corrected events, such that the compensation of motion blur is carried out entirely at the level of event lists.

**Revendications**

1. Dispositif de caméra (10) pour enregistrer un flux d'objets (14) en mouvement par rapport au dispositif de caméra (10), comprenant un capteur d'image basé sur des événements (20) avec une pluralité d'éléments de pixel, qui détecte des événements lors d'un changement d'intensité et génère une liste d'événements avec un tuple de données pour chaque événement, dans lequel un événement comprend respectivement une position X-Y de l'élément de pixel correspondant et une information temporelle, ainsi qu'une unité de contrôle et d'évaluation (24), configurée pour lire les événements sur un intervalle de temps et générer une image à partir de ceux-ci, **caractérisé en ce que**
l'unité de commande et d'évaluation (24) est en outre configurée pour corriger les événements en fonction du temps écoulé depuis un point de référence et du mouvement intervenu pendant ce temps écoulé selon la formule $X_n = X - v * dT$, avec $X$ comme position X de l'élément de pixel déclenchant l'événement sans restreindre la généralité dans la direction du mouvement, $X_n$ nouvelle position, $v$ vitesse du mouvement et $dT$ temps écoulé depuis le point de référence, et pour évaluer les événements eux-mêmes pour la correction du mouvement intervenu pendant le temps écoulé, sans d'abord composer une image à partir de ceux-ci, et seulement en conclusion générer une image avec un flou de mouvement compensé à partir des événements ainsi corrigés, de sorte que la compensation du flou de mouvement s'effectue entièrement au niveau des listes d'événements.

**2.** Dispositif de caméra (10) selon la revendication 1, dans lequel le mouvement du flux d'objets est uniforme.

**3.** Dispositif de caméra (10) selon la revendication 2, dans lequel le capteur d'image (20) est aligné avec les lignes ou colonnes des éléments de pixel dans la direction du mouvement.

**4.** Dispositif de caméra (10) selon la revendication 2 ou 3, qui est monté de manière stationnaire sur un dispositif de transport (12) sur lequel les objets (14) sont transportés.

**5.** Dispositif de caméra (10) selon l'une des revendications précédentes, dans lequel l'unité de commande et d'évaluation (24) est configurée pour déterminer le mouvement à partir des événements.

**6.** Dispositif de caméra (10) selon l'une des revendications précédentes, dans lequel l'unité de commande et d'évaluation (24) est configurée pour collecter des événements sur un intervalle de temps de test afin de déterminer la vitesse d'un mouvement uniforme, de les classer dans un schéma bidimensionnel, avec une première dimension de la position de l'élément de pixel respectif déclenchant l'événement dans la direction du mouvement et une deuxième dimension du temps de déclenchement de l'événement, et pour identifier des événements situés sur une même droite dans le schéma, dans lequel la pente de la droite est proportionnelle à la vitesse.

**7.** Dispositif de caméra (10) selon la revendication 6, dans lequel l'unité de commande et d'évaluation (24) est configurée pour identifier la droite commune à l'aide d'une méthode RANSAC.

**8.** Dispositif de caméra (10) selon la revendication 6 ou 7, dans lequel l'unité de commande et d'évaluation (24) est configurée pour limiter les événements collectés pendant l'intervalle de test à une zone d'intérêt (28) du capteur d'image (20), en particulier une partie d'au moins une ligne ou colonne.

**9.** Dispositif de caméra (10) selon l'une des revendications précédentes, dans lequel l'unité de commande et d'évaluation (24) est configurée pour tenir compte du fait qu'un événement est basé sur un changement d'intensité positive ou négative lors de la génération de l'image, en particulier pour ne prendre en compte que les événements avec un changement positif ou que uniquement les événements avec un changement négatif.

**10.** Dispositif de caméra (10) selon l'une des revendications précédentes, dans lequel l'unité de commande et d'évaluation (24) est configurée pour déterminer le mouvement une fois pour une configuration du dispositif de caméra (10), ou de manière répétée pendant le fonctionnement du dispositif de caméra (10).

**11.** Dispositif de caméra (10) selon l'une des revendications précédentes, dans lequel le capteur d'image (20) génère des informations d'image avec une fréquence de mise à jour d'au moins un kHz ou même d'au moins dix kHz, et/ou dans lequel un élément de pixel respectif détecte lorsque l'intensité détectée par l'élément de pixel change et génère un événement exactement à ce moment, dans lequel en particulier l'événement comporte une information différentielle indiquant si l'intensité a diminué ou augmenté.

**12.** Dispositif de caméra (10) selon l'une des revendications précédentes, dans lequel un événement comporte une information d'intensité.

**13.** Procédé pour enregistrer un flux d'objets (14) en mouvement, dans lequel des événements d'une intensité changeante sont détectés à l'aide d'un capteur d'image basé sur des événements (20) avec une pluralité d'éléments de pixel et sont lus sur un intervalle de temps sous forme d'une liste d'événements avec un tuple de données pour chaque événement, dans lequel un événement comprend respectivement une position X-Y de l'élément de pixel correspondant et une information temporelle, et une image est générée à partir de ceux-ci, **caractérisé en ce que**

les événements sont corrigés en fonction du temps écoulé depuis un point de référence et du mouvement intervenu pendant ce temps écoulé selon la formule $X_n = X - v * dT$, avec X comme position X de l'élément de pixel déclenchant l'événement sans restreindre la généralité dans la direction du mouvement, $X_n$ nouvelle position, v vitesse du mouvement et $dT$ temps écoulé depuis le point de référence, et les événements eux-mêmes sont évalués pour la correction du mouvement intervenu pendant le temps écoulé, sans d'abord composer une image à partir de ceux-ci, et seulement en conclusion une image avec un flou de mouvement compensé à partir des événements ainsi corrigés est générée, de sorte que la compensation du flou de mouvement s'effectue entièrement au niveau des listes d'événements.

Figur 1

Figur 2

Figur 3

Figur 4

28

Figur 5

Figur 6

**EP 4 531 412 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015036592 A1
- WO 2017174579 A1
- WO 2018073379 A1
- EP 3663963 A1
- US 20130335595 A1
- US 11138742 B
- US 11588987 B2
- US 20200175238 A1
- EP 4358530 A1

**In der Beschreibung aufgeführte Nicht-Patentliteratur**

- **GALLEGO, GUILLERMO** ; **HENRI REBECQ** ; **DAVIDE SCARAMUZZA**. A unifying contrast maximization framework for event cameras, with applications to motion, depth, and optical flow estimation. *IEEE Int. Conf. Comput. Vis. Pattern Recog. (CVPR)*, 2018, vol. 1
- **STOFFREGEN, TIMO et al.** Event-based motion segmentation by motion compensation. *Proceedings of the IEEE/CVF International Conference on Computer Vision*, 2019
- A multi-target tracking algorithm for fast-moving workpieces based on event camera. **WANG, YUANZE et al.** IECON 2021-47th Annual Conference of the IEEE Industrial Electronics Society. IEEE, 2021
- **GYONGY, ISTVAN et al.** Object tracking and reconstruction with a quanta image sensor. *Proc. IISW*, 2017, 242-245
- **IWABUCHI, KIYOTAKA** ; **TOMOHIRO YAMAZAKI** ; **TAKAYUKI HAMAMOTO**. *Iterative image reconstruction for quanta image sensor by using variance-based motion estimation*, 2019